# EUROPEAN PATENT APPLICATION

(11) **EP 4 741 219 A1**
(43) Date of publication of application: **13.05.2026**
(21) Application number: 25213090.1
(22) Date of filing: 03.11.2025
(51) Int. Cl.: B60L 58/12, B60L 58/18, B60L 58/21, B60L 58/40, H01M 10/44

(54) **HYBRID POWER SUPPLY SYSTEM AND CONTROL METHOD THEREOF**

(30) Priority: 07.11.2024 KR 20240157348
(71) Applicant: K-fuelcell, Inc., Gyeonggi-do 16976 (KR)
(72) Inventor: JEON, Yei Sik, 16925 Gyeonggi-do (KR); LIM, Hee Sung, 12740 Gyeonggi-do (KR)
(74) Representative: AWA Sweden AB

(57) **Abstract**

A hybrid power supply system and a control method thereof are provided. The hybrid power supply system includes a fuel cell configured to generate power, a plurality of batteries which are selectively connected to the fuel cell, a drive motor which is selectively connected to the plurality of batteries, and a controller configured to connect a battery to be charged among the plurality of batteries to the fuel cell to control charging of the battery to be charged and connect a battery to be discharged among the plurality of batteries to the drive motor to control discharging of the battery to be discharged.

## Description

### BACKGROUND

### 1. Field

Embodiments of the disclosure relate to a hybrid power supply system and a control method thereof.

### 2. Description of the Related Art

Fuel cells are a power generation device which converts chemical energy into electrical energy, which may be used to supply power to industrial, residential, and small electrical appliances and, recently, are most commonly used as a power source for vehicle propulsion.

In a case where fuel cells are used in vehicles, using only fuel cells as the power source for a vehicle results in output characteristics of performance degradation in low-efficiency driving ranges and sharp output voltage drops in high-speed driving ranges, which require high voltages, thereby failing to supply sufficient voltages to meet the requirements of the drive motor, which is problematic.

Sudden loads applied to a vehicle may cause sharp momentary drops in fuel cell output voltage, thereby making it difficult to supply sufficient power to the drive motor, and unidirectional output characteristics of fuel cells may prevent the recovery of energy which is input from the drive motor during vehicle braking.

To compensate for these drawbacks, fuel cell hybrid vehicles each of which have a battery as a separate power source to supply electricity to the drive motor, in addition to a fuel cell, are being developed.

However, due to the parallel connection structure of a fuel cell and a battery which supplies power directly from the fuel cell to the drive motor, conventional fuel cell hybrid vehicles had the following problems.

First, it is difficult to supply power to the battery in a case where power is supplied from the fuel cell to the drive motor, and power from the fuel cell which charges the battery fluctuates depending on the load variation of the drive motor, which causes the battery to overheat.

In addition, because the power which charges the battery is not constant, in a case where a sudden high load occurs on the vehicle and the state of charge of the battery is equal to or lower than the threshold, it is still difficult to supply sufficient power to the drive motor, thereby resulting in reduced output efficiency.

Furthermore, the power output of not only batteries, but also fuel cells, is not constant and varies frequently, which is detrimental to system efficiency and fuel economy, in which the degradation of the catalyst in a fuel cell stack accelerated by the voltage fluctuations causes an adverse effect on durability.

### SUMMARY

Embodiments of the disclosure are intended to solve the aforementioned problems and/or limitations, and have an objective to provide a hybrid power supply system and a control method thereof which enable a fuel cell to generate power at a constant output regardless of the load of a drive motor, thereby adjusting the charging rate of a battery to be constant.

Another objective of embodiments of the disclosure is to provide a hybrid power supply system and a control method thereof which enable charging of the battery by supplying a constant amount of power, so that the heat generation problem of the battery may be minimized and, at the same time, the durability of the fuel cell and the efficiency of the system may be enhanced.

Another objective of embodiments of the disclosure is to provide a hybrid power supply system and a control method thereof which enable the battery to be charged while the drive motor is running, so that the state of charge (SOC) of the battery may be maintained optimally and power may be supplied properly even under high load conditions of the drive motor.

However, these objectives are merely illustrative and not intended to limit the scope of the disclosure.

Embodiments of the disclosure provide a hybrid power supply system including: a fuel cell configured to generate power; a plurality of batteries which are selectively connected to the fuel cell; a drive motor which is selectively connected to the plurality of batteries; and a controller configured to connect a battery to be charged among the plurality of batteries to the fuel cell to control charging of the battery to be charged and connect a battery to be discharged among the plurality of batteries to the drive motor to control discharging of the battery to be discharged.

In an embodiment of the disclosure, the hybrid power supply system may further include a plurality of power relay assemblies disposed on the plurality of batteries, respectively, wherein each of the power relay assemblies includes: a charge path configured to selectively connect the fuel cell and a corresponding battery among the plurality of batteries; and a discharge path separated from the charge path and configured to selectively connect the drive motor and the corresponding battery.

In an embodiment of the disclosure, the discharge path may include: a precharge relay; and a discharge relay connected in parallel to the precharge relay.

In an embodiment of the disclosure, in the discharging of power from the battery to be discharged to the drive motor, the discharging may be performed via the precharge relay and then via the discharge relay.

In an embodiment of the disclosure, the discharge relay may be converted to a path which supplies power generated by the drive motor to the plurality of batteries during regenerative braking.

In an embodiment of the disclosure, the hybrid power supply system may further include battery management systems disposed on the plurality of batteries, respectively, wherein each of the battery management systems monitors battery information including the SOC of a corresponding battery among the plurality of batteries and provides the battery information to the controller.

In an embodiment of the disclosure, the controller may determine a battery among the plurality of batteries as the battery to be charged in a case where the SOC of the battery is equal to or lower than a charging start threshold and a battery among the plurality of batteries as the battery to be discharged in a case where the SOC of the battery is equal to or higher than a charging complete threshold.

Other embodiments of the disclosure provide a control method of a hybrid power supply system, the control method including: checking the SOC of a plurality of batteries; determining a battery to be discharged and a battery to be charged among the plurality of batteries; and supplying power to a drive motor by discharging the battery to be discharged and charging the battery to be charged through power generation of a fuel cell.

In an embodiment of the disclosure, the SOC of the plurality of batteries may be monitored and checked by battery management systems disposed on the plurality of batteries, respectively.

In an embodiment of the disclosure, each of the plurality of batteries may be determined as the battery to be discharged in a case where the state of charge of the battery is equal to or higher than a charging complete threshold and as the battery to be charged in a case where the state of charge of the battery is equal to or lower than a charging start threshold.

Other aspects, features, and advantages of the disclosure will be more clearly understood from the following detailed description, the appended claims, and the accompanying drawings.

### BRIEF DESCRIPTION OF THE DRAWINGS

The above and other aspects, features, and advantages of certain embodiments of the disclosure will be more apparent from the following description taken in conjunction with the accompanying drawings in which:
FIG. 1 is a configuration view illustrating a hybrid power supply system according to an embodiment of the disclosure;
FIG. 2 is a detailed configuration view illustrating the hybrid power supply system shown in FIG. 1;
FIG. 3 is a view illustrating the structure of the power relay assembly (PRA) shown in FIG. 1;
FIG. 4 is a flowchart illustrating a control method of a hybrid power supply system according to an embodiment of the disclosure;
FIG. 5 is a configuration view illustrating a hybrid power supply system according to another embodiment of the disclosure;
FIG. 6 is a detailed configuration view illustrating the hybrid power supply system shown in FIG. 5;
FIG. 7 is a view illustrating the structure of the PRA shown in FIG. 5;
FIG. 8A is an example view illustrating a power generation efficiency range during output control of a conventional fuel cell system; and
FIG. 8B is an example view illustrating a power generation efficiency range during output control of a hybrid power supply system of the disclosure.

### DETAILED DESCRIPTION

Hereinafter, the following embodiments will be described in detail with reference to the accompanying drawings, in which identical or corresponding components are designated by the same reference numerals and repeated descriptions thereof are omitted.

The embodiments may be variously modified, and specific embodiments will be illustrated in the accompanying drawings and described in detail in the detailed description. The effects and features of the embodiments and how to accomplish the same will be apparent with reference to the following detailed description together with the drawings. However, the embodiments are not limited to the embodiments disclosed below, but may be implemented in various forms.

To clearly describe the disclosure, parts not pertinent to the description may be omitted in the drawings, and similar reference numerals may be used for similar elements throughout the specification.

In the following embodiments, the terms "first," "second," etc. are only used to distinguish one element from another element, rather than in a limiting sense.

In the following embodiments, the singular forms include the plural forms as well, unless the context clearly indicates otherwise.

In the following embodiments, the terms "include," "have," etc. indicate the existence of the features or elements described herein, but do not preclude the possibility of one or more other features or elements being added.

In the following embodiments, when a portion, such as a unit, a region, or an element, is referred to as being above or on another portion, the portion may be directly above or on the other portion or an intervening portion, such as a unit, a region, or an element, may also be present between the two portions.

In the following embodiments, the terms "connect," "couple," etc. do not necessarily imply a direct and/or fixed connection between two members unless the context clearly indicates otherwise, and do not exclude the possibility of other members being interposed between the two members.

In the drawings, elements may be exaggerated or reduced in size for ease of explanation. For example, the sizes and thicknesses of the respective elements shown in the drawings are arbitrary for ease of explanation, and therefore the following embodiments are not necessarily limited thereto.

The terms "above," "upper," "below," "lower," etc., as used herein, are used only for ease of describing the relative relationships between the elements shown in the drawings and do not limit the orientation in which the elements are arranged.

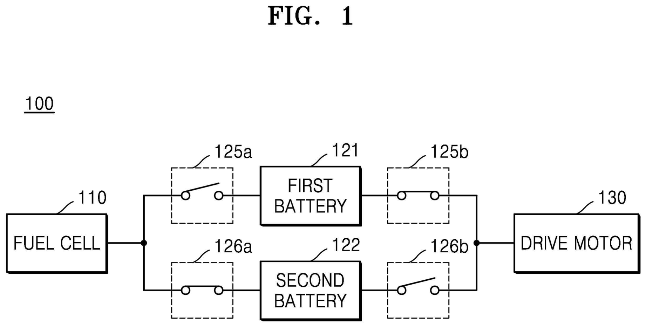

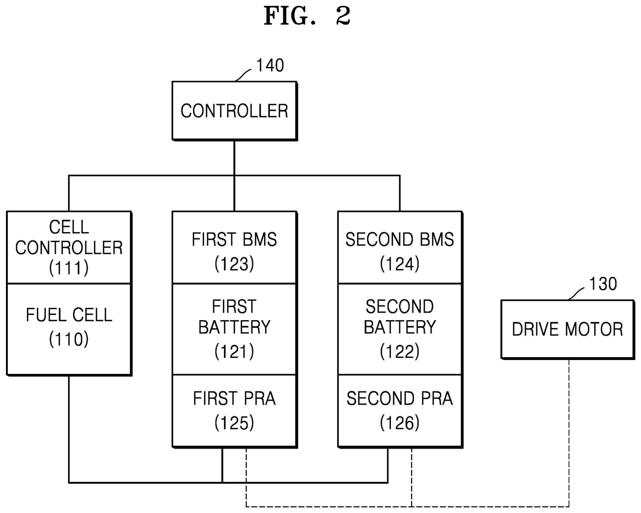

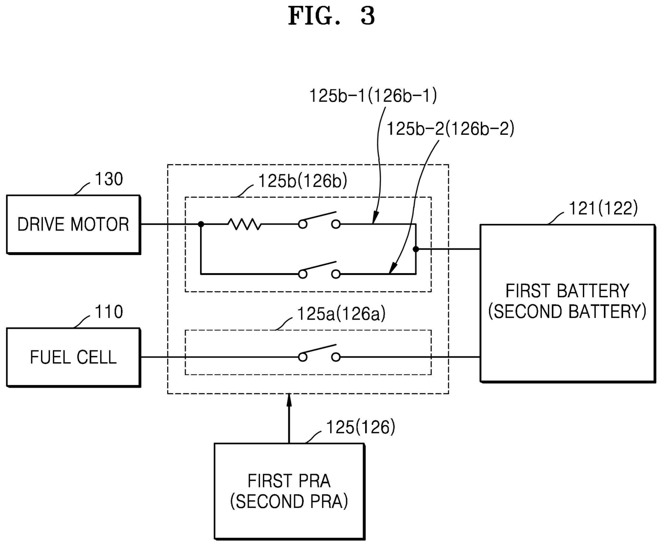

Referring to FIGS. 1 to 3, a hybrid power supply system 100 according to an embodiment of the disclosure may use power generated by a fuel cell 110 only for charging a battery 121 or 122 and power discharged by the battery 121 or 122 only for powering a drive motor 130.

For example, the hybrid power supply system 100 of this embodiment may enable the fuel cell 110 to charge the battery 121 or 122 at a constant output and rate regardless of the load on the drive motor 130 by separating charge paths 125a and 126a and the discharge paths 125b and 126b, thereby minimizing the heat generation problem of the batteries 121 and 122 and enabling efficient thermal management of the batteries.

In the hybrid power supply system 100 of this embodiment, the charge paths 125a and 126a and the discharge paths 125b and 126b are separated to enable charging of the battery 121 or 122 while the drive motor 130 is running, so that the states of charge (SOC) of the batteries 121 and 122 may be maintained optimally and power may be supplied properly even under high load conditions of the drive motor 130.

The hybrid power supply system 100 according to an embodiment of the disclosure may include the fuel cell 110, the plurality of batteries 121 and 122, the drive motor 130, and a controller 140.

The fuel cell 110 may generate power by directly converting chemical energy produced by the oxidation of fuel into electrical energy.

The fuel cell 110 may typically be implemented using, but is not limited to, a polymer electrolyte membrane fuel cell (PEMFC).

The fuel cell 110 may be selectively connected to the plurality of batteries 121 and 122 via the charge paths 125a and 126a, and may supply generated power to the selectively connected battery 121 or 122.

For example, the charge paths 125a and 126a may be implemented using, but is not limited to, a charge relay which connects or disconnects two contacts to electrically connect or disconnect the two contacts.

The fuel cell 110 may stably supply power to only the plurality of batteries 121 and 122 via the charge paths 125a and 126a at a constant output and rate, independently of the supply of power to the drive motor 130.

For example, in the charge paths 125a and 126a of the fuel cell 110, the contact of the first charge path 125a may be connected while the contact of the second charge path 126a is disconnected, thereby stably supplying power only to the first battery 121, excluding the second battery 122.

In the charge paths 125a and 126a of the fuel cell 110, the contact of the second charge path 126a may also be connected while the contact of the first charge path 125a is disconnected, thereby stably supplying power only to the second battery 122, excluding the first battery 121.

The plurality of batteries 121 and 122 may include the first battery 121 and the second battery 122, wherein the first battery 121 and the second battery 122 may be selectively connected to the fuel cell 110 to be charged.

Specifically, in a case where the contact of the second charge path 126a is connected, the second battery 122 may be electrically connected to the fuel cell 110, thereby being charged by receiving power from the fuel cell 110.

In this case, because the second battery 122 is electrically disconnected from the drive motor 130 due to the disconnection of the contact of the second discharge path 126b of the discharge paths 125b and 126b, the second battery 122 may only perform the charging process stably.

During the charging process of the second battery 122, the first battery 121 may discharge power to the drive motor 130, due to the connection of the contact of the first discharge path 125b of the discharge paths 125b and 126b.

In this case, because the first battery 121 is electrically disconnected from the fuel cell 110 due to the disconnection of the contact of the first charge path 125a, the first battery 121 may only perform the discharging process stably.

The drive motor 130 may be selectively connected to the plurality of batteries 121 and 122 via the discharge paths 125b and 126b.

Specifically, the drive motor 130 may be electrically connected to the first battery 121 due to the connection of the contact of the first discharge path 125b, and may be electrically disconnected from the second battery 122 due to the disconnection of the contact of the second discharge path 126b.

Because the drive motor 130 is electrically connected to the first battery 121 via the first discharge path 125b, the drive motor 130 may be driven by receiving power supplied through the discharge of the first battery 121.

In this case, the first battery 121, which is electrically connected to the drive motor 130, is electrically disconnected from the fuel cell 110 due to the disconnection of the contact of the first charge path 125a, and thus may only perform the discharging process stably.

In contrast, the second battery 122, which is electrically disconnected from the drive motor 130, may be charged by receiving power generated by the fuel cell 110 due to the connection of the contact of the second charge path 126a.

In this case, the second battery 122 is electrically disconnected from the drive motor 130 due to the disconnection of the contact of the second discharge path 126b, and thus may only perform the charging process stably.

The charge paths 125a and 126a and the discharge paths 125b and 126b described above may be arranged as separate switches to be isolated from the corresponding batteries 121 and 122, but this embodiment discloses that the charge paths and the discharge paths are electrically isolated in a single power relay assembly (PRA) module.

Specifically, the first battery 121 and the second battery 122 may include a first PRA 125 and a second PRA 126, respectively, as a switch module.

The first PRA 125 of the first battery 121 may include a first charge path 125a and a first discharge path 125b, wherein the first charge path 125a and the first discharge path 125b may form mutually isolated electrical lines in a single module of the first PRA 125.

For example, the first battery 121 may be electrically connected to or disconnected from the fuel cell 110 via the first charge path 125a of the first PRA 125, and may be electrically connected to or disconnected from the drive motor 130 via the first discharge path 125b of the first PRA 125, independently of the first charge path 125a.

Therefore, the first battery 121 may be charged by receiving power from the fuel cell 110 only via the first charge path 125a, and may supply power to the drive motor 130 by discharging power only via the first discharge path 125b.

In this case, the first discharge path 125b may include a first precharge relay 125b-1 and a first discharge relay 125b-2 connected in parallel to the first precharge relay 125b-1.

Specifically, in a case where power is discharged from the first battery 121 to the drive motor 130, connecting each relay to supply power to the drive motor 130 may cause excessive current to flow initially, which may cause the relay to stick in some cases.

To prevent this, a limited amount of initial discharge current may first be supplied via the first precharge relay 125b-1, and then, once the voltage of the drive motor 130 balances with the voltage of the first battery 121, power may be continuously supplied via the first discharge relay 125b-2.

In this case, the first discharge relay 125b-2 may also be switched to and used as a path for supplying power to the first battery 121, which is generated by the drive motor 130 during regenerative braking.

The second PRA 126 of the second battery 122 may also include the second charge path 126a and the second discharge path 126b, wherein the second charge path 126a and the second discharge path 126b may form mutually isolated electrical lines in a single module of the second PRA 126.

For example, the second battery 122 may be electrically connected to or disconnected from the fuel cell 110 via the second charge path 126a of the second PRA 126, and may be electrically connected to or disconnected from the drive motor 130 via the second discharge path 126b of the second PRA 126, independently of the second charge path 126a.

Therefore, the second battery 122 may be charged by receiving power from the fuel cell 110 only via the second charge path 126a, and may supply power to the drive motor 130 by discharging power only via the second discharge path 126b.

In this case, the second discharge path 126b may include a second precharge relay 126b-1 and a second discharge relay 126b-2 connected in parallel to the second precharge relay 126b-1.

Specifically, in a case where power is discharged from the second battery 122 to the drive motor 130, connecting each relay to supply power to the drive motor 130 may cause excessive current to flow initially, which may cause the relay to stick in some cases.

To prevent this, a limited amount of initial discharge current may first be supplied via the second precharge relay 126b-1, and then, once the voltage of the drive motor 130 balances with the voltage of the second battery 122, power may be continuously supplied via the second discharge relay 126b-2.

In this case, the second discharge relay 126b-2 may also be switched to and used as a path for supplying power to the second battery 122, which is generated by the drive motor 130 during regenerative braking.

The controller 140 may control charging by connecting the battery 121 or 122 which needs to be charged to the fuel cell 110 based on the status information of the plurality of batteries 121 and 122, or control discharging by connecting the battery 121 or 122 capable of discharging to the drive motor 130.

For example, the controller 140 may determine the battery 121 or 122 to be charged and the battery 121 or 122 to be discharged by checking the SOC of the first battery 121 and the second battery 122.

In this case, a first battery management system (BMS) 123 and a second BMS 124 may be disposed in the first battery 121 and the second battery 122, respectively, and may provide first battery information and second battery information to the controller 140, which include the SOC of the first battery 121 and the SOC of the second battery 122, respectively.

For example, the first BMS 123 and the second BMS 124 may monitor, in real time, the first battery information and the second battery information including the SOC of the first battery 121 and the SOC of the second battery 122, and provide the first battery information and the second battery information to the controller 140.

Accordingly, the controller 140 may determine the battery 121 or 122 to be charged and the battery 121 or 122 to be discharged based on the status information of the first battery 121 and the second battery 122 provided by the first BMS 123 and the second BMS 124.

In this case, the controller 140 may determine any of the first battery 121 and the second battery 122 as a battery to be charged in a case where the SOC of the battery is equal to or lower than the charging start threshold and as a battery to be discharged in a case where the SOC of the battery is equal to or higher than the charging complete threshold.

For example, the charging start threshold and the charging complete threshold may be preset variably by considering the output of the fuel cell 110 and the type or capacity of the first battery 121 and the second battery 122.

In a case where it is difficult to determine the battery to be charged or the battery to be discharged, the battery having the higher SOC may be determined as the battery to be discharged, and the battery having the lower SOC may be determined as the battery to be charged.

As a result of the determination, the controller 140 may charge the battery 121 or 122 to be charged by connecting the same to the fuel cell 110, and may supply power to the drive motor 130 by connecting the battery 121 or 122 to be discharged to the drive motor 130 and discharging the same.

The controller 140 is a higher-level controller connected to the first BMS 123 and the second BMS 124, for example, via a controller area network (CAN) communication means, and may also be connected to a cell controller 111 which monitors the status information of the fuel cell 110 via the CAN communication means.

The controller 140 may also control the operation of various electrical/electronic devices in the hybrid power supply system 100 of this embodiment, such as the switching control of the aforementioned first and second PRAs 125 and 126 and the drive control of the aforementioned drive motor 130.

Hereinafter, a control method of the hybrid power supply system 100 according to an embodiment of the disclosure will be described in more detail with reference to the accompanying drawings.

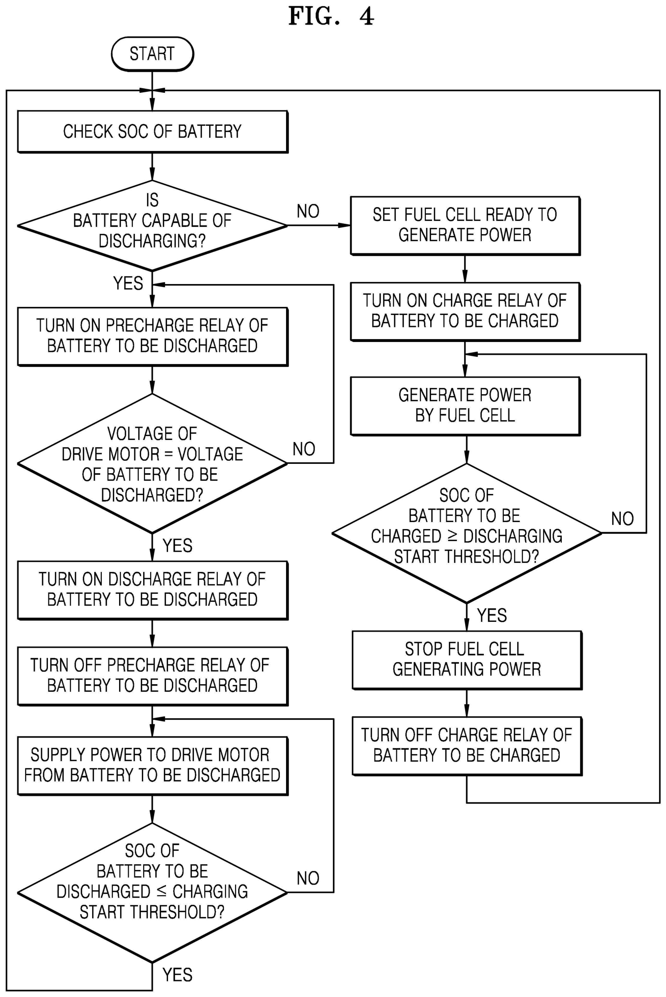

FIG. 4 is a flowchart illustrating a control method of a hybrid power supply system according to an embodiment of the disclosure.

Referring to FIGS. 1 to 4, the control method of the hybrid power supply system 100 according to an embodiment of the disclosure may be performed by the following process.

First, the SOC of the plurality of batteries 121 and 122 is checked.

For example, the first BMS 123 and the second BMS 124 may monitor the SOC of the first battery 121 and the second battery 122 in real time and provide the respective SOC to the controller 140.

Thereafter, the controller 140 may determine the battery 121 or 122 to be charged and the battery 121 or 122 to be discharged based on the SOC of the first battery 121 and the second battery 122 provided by the first BMS 123 and the second BMS 124.

For example, in a case where the charging start threshold is 20% or less and the discharging start threshold is 100% or more, assuming the SOC of the first battery 121 is 100% and the SOC of the second battery 122 is 20%, the controller 140 may determine the first battery 121 as the battery to be discharged and the second battery 122 as the battery to be charged.

The first battery 121, which is determined to be discharged as a result of the determination by the controller 140, may be electrically connected to the drive motor 130 and discharged.

Specifically, the first battery 121 determined as the battery to be discharged may be electrically connected to the drive motor 130 via the first discharge path 125b.

At this time, the first pre-charge relay 125b-1 may be turned on first to limit initial discharge current from the first battery 121 and supply the limited initial discharge current to the drive motor 130.

The supply of power via the first precharge relay 125b-1 may be performed until the voltage of the drive motor 130 reaches the voltage of the first battery 121.

Thereafter, in a case where the voltage of the drive motor 130 and the voltage of the first battery 121 balance with each other, the first discharge relay 125b-2 is turned on and the first precharge relay 125b-1 is turned off.

By turning the first discharge relay 125b-2 on, power may be continuously supplied from the first battery 121 to the drive motor 130.

Thereafter, in a case where the SOC of the first battery 121 is equal to or lower than the charging start threshold of 20%, the first discharge relay 125b-2 may be turned off to terminate the supply of power via discharging, and the first battery 121 may be determined as the battery to be charged.

The second battery 122, which is determined as the battery to be charged as the result of the determination by the controller 140, may be electrically connected to and charged by the fuel cell 110.

Specifically, in a state where the fuel cell 110 is ready to generate power, the second battery 122 determined as the battery to be charged may be electrically connected to the fuel cell 110 via the second charge path 126a.

At this time, a charge relay may be used in the second charge path 126a, and the second battery 122 may be electrically connected to the fuel cell 110 in response to the charge relay being turned on.

In a case where the second battery 122 is connected to the fuel cell 110, the fuel cell 110 may generate power, and the power generated by the fuel cell 110 may be supplied to the second battery 122.

Thereafter, in a case where the SOC of the second battery 122 reaches or exceeds the discharging start threshold of 100%, the charging relay, i.e., the second charge path 126a, may be turned off.

Thus, the charging of the second battery 122 may be completed, and the second battery 122 may be determined as the battery to be discharged.

As described above, the control method of the hybrid power supply system 100 according to this embodiment may perform the charging process and the discharging process independently by separating the charge paths 125a and 126a and the discharge paths 125b and 126b.

Consequently, the power generated by the fuel cell 110 may only be used to charge the battery to be charged (i.e., the battery 122 in this embodiment), and only the power discharged from the battery to be discharged (i.e., the battery 121 in this embodiment) may be supplied to the drive motor 130.

As a result, even while the drive motor 130 is running using the battery to be discharged, the battery to be charged may be stably charged at a constant output and rate using the fuel cell 110.

Therefore, the thermal management of the batteries may be efficiently controlled by minimizing the heat generation problem of the batteries, and proper supply of power may be ensured even under high load by maintaining the optimal SOC of the battery.

Next, another hybrid power supply system 200 according to another embodiment of the disclosure is described as follows.

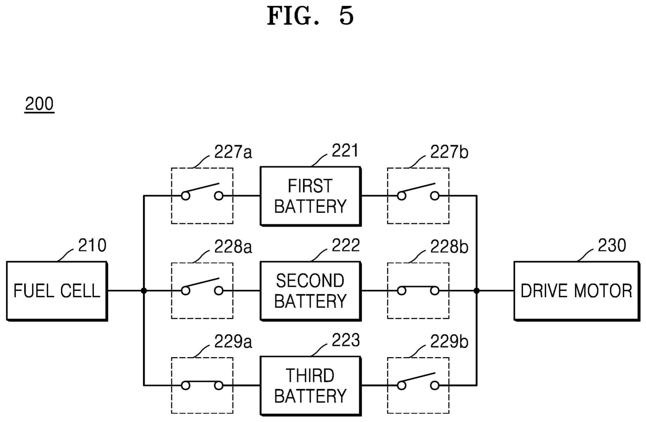

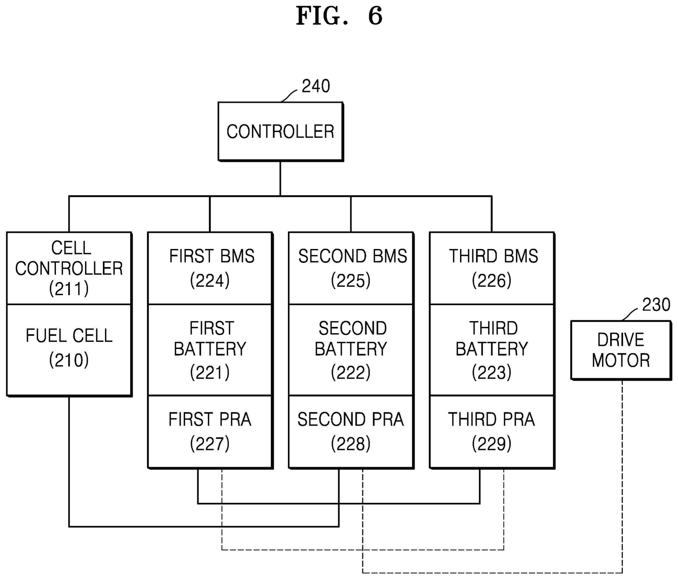

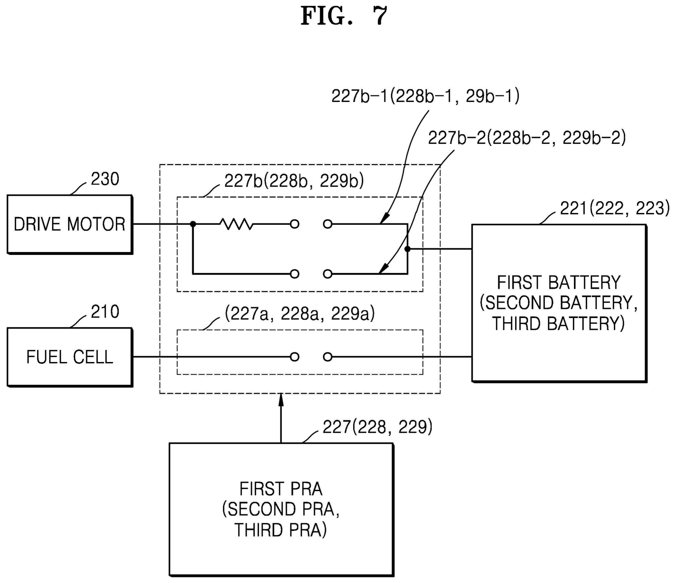

FIG. 5 is a configuration view illustrating a hybrid power supply system according to another embodiment of the disclosure, FIG. 6 is a detailed configuration view illustrating the hybrid power supply system shown in FIG. 5, and FIG. 7 is a view illustrating the structure of the PRA shown in FIG. 5.

FIGS. 5 to 7, the hybrid power supply system 200 according to another embodiment of the disclosure may use power generated by the fuel cell 210 only for charging a battery 221, 222, or 223 and power discharged from the battery 221, 222, or 223 only for powering a drive motor 230.

For example, the hybrid power supply system 200 of this embodiment may enable the fuel cell 210 to charge the battery 221, 222, or 223 at a constant output and rate, regardless of load on the drive motor 230, by separating charge paths 227a, 228a, and 229a and the discharge paths 227b, 228b, and 229b, thereby minimizing the heat generation problem of the batteries 221, 222, and 223 and enabling efficient thermal management of the batteries.

Furthermore, in the hybrid power supply system 200 of this embodiment, the charge paths 227a, 228a, and 229a and the discharge paths 227b, 228b, and 229b are separated to enable charging of the batteries 221, 222, and 223 while the drive motor 230 is running, so that the SOC of the batteries 221, 222, and 223 may be optimally maintained and power may be properly supplied even under high load conditions of the drive motor 230.

The hybrid power supply system 200 according to another embodiment of the disclosure may include a fuel cell 210, a plurality of batteries 221, 222, and 223, a drive motor 230, and a controller 240.

The fuel cell 210 may generate power by directly converting chemical energy produced by the oxidation of fuel into electrical energy.

The fuel cell 210 may typically be implemented using, but is not limited to, a polymer electrolyte membrane fuel cell (PEMFC).

The fuel cell 210 may be selectively connected to the plurality of batteries 221, 222, and 223 via the charge paths 227a, 228a, and 229a, and may supply generated power to the selectively connected battery 221, 222, or 223.

For example, the charge paths 227a, 228a, and 229a may be implemented using, but is not limited to, a charge relay which connects or disconnects two contacts to electrically connect or disconnect the two contacts.

The fuel cell 210 may stably supply power to only the plurality of batteries 221, 222, and 223 via the charge paths 227a, 228a, and 229a at a constant output and rate, independently of the supply of power to the drive motor 230.

For example, in the charge paths 227a, 228a, and 229a of the fuel cell 210, the contact of the third charge paths 229a is connected while the contact of the first charge path 227a and the contact of the charge path228a may be disconnected, thereby stably supplying power only to the third battery 223, excluding the first and second batteries 221 and 222.

In the charge paths 227a, 228a, and 229a of the fuel cell 210, the contact of either the first charge path 227a or the second charge path 228a may be connected while the contacts of the remaining charge paths are disconnected, thereby stably supplying power only to the first battery 221 or the second battery 222, excluding the batteries in which the contacts of the charge paths are disconnected.

The plurality of batteries 221, 222, and 223 may include the first battery 221, the second battery 222, and the third battery 223, wherein the first to third batteries 221, 222, and 223 may be selectively connected to the fuel cell 210 to be charged.

Specifically, in a case where the contact of the third charge path 229a is connected, the third battery 223 may be electrically connected to the fuel cell 210, thereby being charged by receiving power from the fuel cell 210.

In this case, because the third battery 223 is electrically disconnected from the drive motor 230 due to the disconnection of the contact of the third discharge path 229b of the discharge paths 227b, 228b, and 229b, the third battery 223 may only perform the charging process stably.

During the charging process of the third battery 223, the second battery 222 may discharge power to the drive motor 230, due to the connection of the contact of the second discharge path 228b of the discharge paths 227b, 228b, and 229b.

In this case, because the second charge path 228a of the second battery 222 is electrically disconnected from the fuel cell 210, the second battery 222 may only perform the discharging process stably.

During the charging process of the third battery 223, both the contact of the first charge path 227a and the contact of the first discharge path 227b may be disconnected, thereby disabling charging or discharging of the first battery 221, or the contact of either the first charge path 227a or the first discharge path 227b may be connected, thereby enabling charging or discharging of the first battery 221.

The drive motor 230 may be selectively connected to the plurality of batteries 221, 222, and 223 via the discharge paths 227b, 228b, and 229b.

Specifically, the drive motor 230 may be electrically connected to the second battery 222 due to the connection of the contact of the second discharge path 228b, and may be electrically disconnected from the first battery 221 and the third battery 223 due to the disconnection of the contact of the discharge path227b and the contact of the third discharge path 229b.

Because the drive motor 230 is electrically connected to the second battery 222 via the second discharge path 228b, the drive motor 230 may be driven by receiving power supplied through the discharge of the second battery 222.

In this case, the second battery 222, which is electrically connected to the drive motor 230, is electrically disconnected from the fuel cell 210 due to the disconnection of the contact of the second charge path 228a, and thus may only perform the discharging process stably.

In contrast, the third battery 223, which is electrically disconnected from the drive motor 230, may be charged by receiving power generated by the fuel cell 210 due to the connection of the contact of the third charge path 229a.

The first battery 221, which is electrically disconnected from the drive motor 230, may enter a charging standby state or a discharging standby state due to the disconnection of the contact of the first charge path 227a.

Although not shown in detail, the first battery 221 may also be charged or discharged due to the connection of the contact of the first charge path 227a or the first discharge path 227b.

In this case, the third battery 223, which is electrically disconnected from the drive motor 230, is electrically disconnected from the fuel cell 210 due to the disconnection of the contact of the third discharge path 229b, and thus may only perform the charging process stably.

The charge paths 227a, 228a, and 229a and the discharge paths 227b, 228b, and 229b described above may be arranged as separate switches to be isolated from the corresponding batteries 221, 222, and 223, but this embodiment discloses that the charge paths and the discharge paths are electrically isolated in a single PRA module.

Specifically, the first to third batteries 221, 222, and 223 may include first to third PRAs 227, 228, and 229, respectively, as a switch module.

The first PRA 227 of the first battery 221 may include a first charge path 227a and a first discharge path 227b, wherein the first charge path 227a and the first discharge path 227b may form mutually isolated electrical lines in a single module of the first PRA 227.

For example, the first battery 221 may be electrically connected to or disconnected from the fuel cell 210 via the first charge path 227a of the first PRA 227, and may be electrically connected to or disconnected from the drive motor 230 via the first discharge path 227b of the first PRA 227, independently of the first charge path 227a.

Therefore, the first battery 221 may be charged by receiving power from the fuel cell 210 only via the first charge path 227a, and may supply power to the drive motor 230 by discharging power only via the first discharge path 227b.

In this case, the first discharge path 227b may include a first precharge relay 227b-1 and a first discharge relay 227b-2 connected in parallel to the first precharge relay 227b-1.

Specifically, in a case where power is discharged from the first battery 221 to the drive motor 230, connecting each relay to supply power to the drive motor 230 may cause excessive current to flow initially, which may cause the relay to stick in some cases.

To prevent this, a limited amount of initial discharge current may first be supplied via the first precharge relay 227b-1, and then, once the voltage of the drive motor 230 balances with the voltage of the first battery 221, power may be continuously supplied via the first discharge relay 227b-2.

In this case, the first discharge relay 227b-2 may also be switched to and used as a path for supplying power to the first battery 221, which is generated by the drive motor 230 during regenerative braking.

The second PRA 228 of the second battery 222 may also include the second charge path 228a and the second discharge path 228b, wherein the second charge path 228a and the second discharge path 228b may form mutually isolated electrical lines in a single module of the second PRA 228.

For example, the second battery 222 may be electrically connected to or disconnected from the fuel cell 210 via the second charge path 228a of the second PRA 228, and may be electrically connected to or disconnected from the drive motor 230 via the second discharge path 228b of the second PRA 228, independently of the second charge path 228a.

Therefore, the second battery 222 may be charged by receiving power from the fuel cell 210 only via the second charge path 228a, and may supply power to the drive motor 230 by discharging power only via the second discharge path 228b.

In this case, the second discharge path 228b may include a second precharge relay 228b-1 and a second discharge relay 228b-2 connected in parallel to the second precharge relay 228b-1.

Specifically, in a case where power is discharged from the second battery 222 to the drive motor 230, connecting each relay to supply power to the drive motor 230 may cause excessive current to flow initially, which may cause the relay to stick in some cases.

To prevent this, a limited amount of initial discharge current may first be supplied via the second precharge relay 228b-1, and then, once the voltage of the drive motor 230 balances with the voltage of the second battery 222, power may be continuously supplied via the second discharge relay 228b-2.

In this case, the second discharge relay 228b-2 may also be switched to and used as a path for supplying power to the second battery 222, which is generated by the drive motor 230 during regenerative braking.

The third PRA 229 of the third battery 223 may also include the third charge path 229a and the third discharge path 229b, wherein the third charge path 229a and the third discharge path 229b may form mutually isolated electrical lines in a single module of the third PRA 229.

For example, the third battery 223 may be electrically connected to or disconnected from the fuel cell 210 via the third charge path 229a of the third PRA 229, and may be electrically connected to or disconnected from the drive motor 230 via the third discharge path 229b of the third PRA 229, independently of the third charge path 229a.

Therefore, the third battery 223 may be charged by receiving power from the fuel cell 210 only via the third charge path 229a, and may supply power to the drive motor 230 by discharging power only via the third discharge path 229b.

In this case, the third discharge path 229b may include a third precharge relay 229b-1 and a third discharge relay 229b-2 connected in parallel to the third precharge relay 229b-1.

Specifically, in a case where power is discharged from the third battery 223 to the drive motor 230, connecting each relay to supply power to the drive motor 230 may cause excessive current to flow initially, which may cause the relay to stick in some cases.

To prevent this, a limited amount of initial discharge current may first be supplied via the third precharge relay 229b-1, and then, once the voltage of the drive motor 230 balances with the voltage of the third battery 223, power may be continuously supplied via the third discharge relay 229b-2.

In this case, the third discharge relay 229b-2 may also be switched to and used as a path for supplying power to the third battery 223, which is generated by the drive motor 230 during regenerative braking.

The controller 240 may control charging by connecting the battery 221, 222, or 223 which needs to be charged to the fuel cell 210 based on the status information of the plurality of batteries 221, 222, and 223, or control discharging by connecting the battery 221, 222, or 223 capable of discharging to the drive motor 230.

For example, the controller 240 may determine the battery 221, 222, or 223 to be charged and the battery 221, 222, or 223 to be discharged by checking the SOC of the first to third batteries 221, 222, and 223.

In this case, first to third BMSs 224, 225, and 226 may be disposed in the first to third batteries 221, 222, and 223, respectively, and may provide first to third battery information to the controller 240, which includes the SOC of the first to third batteries 221, 222, and 223, respectively.

For example, the first to third BMSs 224, 225, and 226 may monitor, in real time, the first to third battery information including the SOC of the first to third batteries 221, 222, and 223, and provide the first to third battery information to the controller 240.

Accordingly, the controller 240 may determine the battery 221, 222, or 223 to be charged and the battery 221, 222, or 223 to be discharged based on the status information of the first to third batteries 221, 222, and 223 provided by the first to third BMSs 224, 225, and 226.

In this case, the controller 240 may determine any of the first to third batteries 221, 222, and 223 as a battery to be charged in a case where the SOC of the battery is equal to or lower than the charging start threshold and as a battery to be discharged in a case where the SOC of the battery is equal to or higher than the charging complete threshold.

For example, the charging start threshold and the charging complete threshold may be preset variably by considering the output of the fuel cell 210 and the type or capacity of the first to third batteries 221, 222, and 223.

In a case where it is difficult to determine the battery to be charged or the battery to be discharged, the battery having the higher SOC may be determined as the battery to be discharged, and the battery having the lower SOC may be determined as the battery to be charged.

In a case where a plurality of batteries are to be charged, the batteries may be charged sequentially starting with the battery having the lowest SOC or may be charged at the same time.

In a case where a plurality of batteries are to be discharged, the batteries may be discharged sequentially starting with the battery having the highest SOC or may be discharged at the same time.

As a result of the determination, the controller 240 may charge the battery 221, 222, or 223 to be charged by connecting the same to the fuel cell 210, and may supply power to the drive motor 230 by connecting the battery 221, 222, or 223 to be discharged to the drive motor 230 and discharging the same.

The controller 240 is a higher-level controller connected to the first to third BMSs 224, 225, and 226, for example, via a CAN communication means, and may also be connected to a cell controller 211 which monitors the status information of the fuel cell 210 via the CAN communication means.

The controller 240 may also control the operation of various electrical/electronic devices in the hybrid power supply system 200 of this embodiment, such as the switching control of the aforementioned first to third PRAs 227, 228, and 229 and the drive control of the aforementioned drive motor 230.

Hereinafter, a control method of the hybrid power supply system 200 according to another embodiment of the disclosure will be described in more detail with reference to the accompanying drawings.

Because the control method of the hybrid power supply system 200 of this embodiment has a control process similar to that of the aforementioned embodiment, reference is made again to FIG. 4 for the sake of convenience.

Referring to FIGS. 4 to 7, the control method of the hybrid power supply system 200 according to another embodiment of the disclosure may be performed by the following process.

First, the SOC of the plurality of batteries 221, 222, and 223 is checked.

For example, the first to third BMSs 224, 225, and 226 may monitor the SOC of the first to third batteries 221, 222, and 223 in real time and provide the respective SOC to the controller 240.

Thereafter, the controller 240 may determine the battery 221, 222, or 223 to be charged and the battery 221, 222, or 223 to be discharged based on the SOC of the first to third batteries 221, 222, and 223 provided by the first to third BMSs 224, 225, and 226.

For example, in a case where the charging start threshold is 20% or less and the discharging start threshold is 100% or more, assuming the SOC of the first battery 221 is 80%, the SOC of the second battery 222 is 100%, and the SOC of the third battery 223 is 20%, the controller 240 may determine the second battery 222 as the battery to be discharged and the third battery 223 as the battery to be charged.

The second battery 222, which is determined to be discharged as a result of the determination by the controller 240, may be electrically connected to the drive motor 230 and discharged.

Specifically, the second battery 222 determined as the battery to be discharged may be electrically connected to the drive motor 230 via the second discharge path228b.

At this time, the second precharge relay 228b-1 may be turned on first to lower power discharged from the second battery 222 and supply the lowered discharge power to the drive motor 230.

The supply of power via the second precharge relay 228b-1 may be performed until the voltage of the drive motor 230 reaches the voltage of the second battery 222.

Thereafter, in a case where the voltage of the drive motor 230 and the voltage of the second battery 222 balance with each other, the second discharge relay 228b-2 is turned on and the second precharge relay 228b-1 is turned off.

By turning the second discharge relay 228b-2 on, power may be continuously supplied from the second battery 222 to the drive motor 230.

Thereafter, in a case where the SOC of the second battery 222 is equal to or less than the charging start threshold of 20%, the second discharge relay 228b-2 may be turned off to terminate the supply of power via discharging, and the second battery 222 may be determined as the battery to be charged.

The third battery 223, which is determined as the battery to be charged as the result of the determination by the controller 240, may be electrically connected to and charged by the fuel cell 210.

Specifically, in a state where the fuel cell 210 is ready to generate power, the third battery 223 determined as the battery to be charged may be electrically connected to the fuel cell 210 via the third charge path 229a.

At this time, a charge relay may be used in the third charge path 229a, and the third battery 223 may be electrically connected to the fuel cell 210 in response to the charge relay being turned on.

In a case where the third battery 223 is connected to the fuel cell 210, the fuel cell 210 may generate power, and the power generated by the fuel cell 210 may be supplied to the third battery 223.

Thereafter, in a case where the SOC of the third battery 223 reaches or exceeds the discharging start threshold of 100%, the charging relay, i.e., the third charge path 229a, may be turned off.

Thus, the charging of the third battery 223 may be completed, and the third battery 223 may be determined as the battery to be discharged.

Although not shown in detail, the first battery 221, which is excluded from both the battery to be charged and the battery to be discharged as the result of the determination by the controller 240, enters a standby state and may be the battery to be discharged during running of the next drive motor 230.

As described above, the control method of the hybrid power supply system 200 according to this embodiment may also perform the charging process and the discharging process independently by separating the charge paths 227a, 228a, and 229a and the discharge paths 227b, 228b, and 229b.

Consequently, the power generated by the fuel cell 210 may only be used to charge the battery to be charged (i.e., the battery 223 in this embodiment), and only the power discharged from the battery 222 to be discharged (i.e., the battery 222 in this embodiment) may be supplied to the drive motor 230.

As a result, even while the drive motor 230 is running using the battery to be discharged, the battery to be charged may be stably charged at a constant output and rate using the fuel cell 210.

Therefore, the thermal management of the batteries may be efficiently controlled by minimizing the heat generation problem of the batteries, and proper supply of power may be ensured even under high load by maintaining the optimal SOC of the battery.

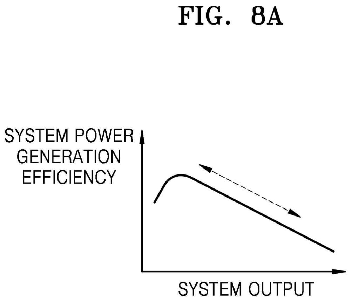

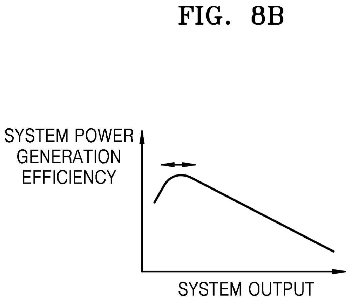

FIG. 8A is an example view illustrating a power generation efficiency range during output control of a conventional fuel cell system, and FIG. 8B is an example view illustrating a power generation efficiency range during output control of a hybrid power supply system of the disclosure.

Referring to FIG. 8A, because the conventional fuel cell system is a system which supplies power directly from the fuel cell to the drive motor, the fuel cell generates power in the low-efficiency power generation range during system output control.

Consequently, the existing fuel cell system is disadvantageous in terms of system efficiency and fuel economy due to the fluctuating power output of the fuel cell which varies frequently, in which the degradation of the catalyst in a fuel cell stack accelerated by the voltage fluctuations causes an adverse effect on durability.

However, referring to FIG. 8B, in the hybrid power supply system of the disclosure, the fuel cell generates power in a range where the power generation efficiency is high and constant during system output control because the fuel cell charges the battery at a constant output regardless of the load of the drive motor operates.

Accordingly, the hybrid power supply system of the disclosure may increase system efficiency and fuel economy and enhance the durability of the fuel cell, due to constant power output and high efficiency of the fuel cell.

According to the aforementioned configurations of the disclosure, the hybrid power supply system and the control method thereof according to embodiments of the disclosure may enable the fuel cell to generate power at a constant output regardless of the load of the drive motor, thereby maintaining the constant charging rate of the battery.

The hybrid power supply system and the control method thereof according to embodiments of the disclosure may enable charging of the battery by supplying a constant amount of power, so that the heat generation problem of the battery may be minimized and thermal management of the battery may be efficiently performed.

The hybrid power supply system and the control method thereof according to embodiments of the disclosure may enable the battery to be charged while the drive motor is running, so that the SOC of the battery may be maintained optimally and power may be supplied properly even under high load conditions of the drive motor.

The hybrid power supply system and the control method thereof according to embodiments of the disclosure enable a fuel cell system to operate in an optimal efficiency range, thereby improving the durability of the fuel cell and the efficiency of the system.

It should be understood that these effects do not limit the technological scope of the disclosure.

Although the disclosure has been described with reference to the embodiments illustrated in the drawings, it will be apparent to a person having ordinary skill in the art that the embodiments are provided for illustrative purposes only, and that various modifications and alterations may be made. Accordingly, the true technological scope of the disclosure shall be defined only by the appended claims.

## Claims

1. A hybrid power supply system comprising:
a fuel cell configured to generate power;
a plurality of batteries which are selectively connected to the fuel cell;
a drive motor which is selectively connected to the plurality of batteries; and
a controller configured to connect a battery to be charged among the plurality of batteries to the fuel cell to control charging of the battery to be charged and connect a battery to be discharged among the plurality of batteries to the drive motor to control discharging of the battery to be discharged.

2. The hybrid power supply system of claim 1, further comprising a power relay assembly disposed on each of the plurality of batteries,
wherein the power relay assembly comprises:
a charge path configured to selectively connect the fuel cell and a corresponding battery among the plurality of batteries; and
a discharge path separated from the charge path and configured to selectively connect the drive motor and the corresponding battery.

3. The hybrid power supply system of claim 2,
wherein the discharge path comprises:
a precharge relay; and
a discharge relay connected in parallel to the precharge relay.

4. The hybrid power supply system of claim 3,
wherein in the discharging of power from the battery to be discharged to the drive motor, the discharging is performed via the precharge relay and then via the discharge relay.

5. The hybrid power supply system of claim 3,
wherein the discharge relay is converted to a path which supplies power generated by the drive motor to each of the plurality of batteries during regenerative braking.

6. The hybrid power supply system of claim 1, further comprising a battery management system disposed on each of the plurality of batteries,
wherein the battery management system monitors battery information including a state of charge of a corresponding battery among the plurality of batteries and provides the battery information to the controller.

7. The hybrid power supply system of claim 1, wherein
the controller determines a battery among the plurality of batteries as the battery to be charged in a case where the state of charge of the battery is equal to or lower than a charging start threshold and a battery among the plurality of batteries as the battery to be discharged in a case where the state of charge of the battery is equal to or higher than a charging complete threshold.

8. A control method of a hybrid power supply system, the control method comprising:
checking states of charge of a plurality of batteries;
determining a battery to be discharged and a battery to be charged among the plurality of batteries; and
supplying power to a drive motor by discharging the battery to be discharged and charging the battery to be charged through power generation of a fuel cell.

9. The control method of claim 8, wherein the states of charge of the plurality of batteries are monitored and checked by a battery management system disposed on each of the plurality of batteries.

10. The control method of claim 8, wherein each of the plurality of batteries is determined as the battery to be discharged in a case where the state of charge of the battery is equal to or higher than a charging complete threshold and as the battery to be charged in a case where the state of charge of the battery is equal to or lower than a charging start threshold.
